# NEUE EUROPÄISCHE PATENTSCHRIFT

(11) **EP 1 767 920 B2**
(45) Veröffentlichungstag und Bekanntmachung des Hinweises auf die Entscheidung über den Einspruch: **13.01.2016**
(45) Hinweis auf die Patenterteilung: 05.03.2008
(21) Anmeldenummer: 06450106.7
(22) Anmeldetag: 26.07.2006
(51) Int. Cl.: G01N 1/22, B01D 46/24

(54) **Vorrichtung zur Entnahme heisser Gasproben aus einem Reaktionsgefäss**
Apparatus for hot gas sampling from a reactor.
Dispositif de prélèvement d'échantillons de gaz chauds dans un réacteur.

(30) Priorität: 22.09.2005 AT 15622005
(43) Veröffentlichungstag der Anmeldung: 28.03.2007
(73) Patentinhaber: Primetals Technologies Austria GmbH, 4031 Linz (AT)
(72) Erfinder: Hölzl, Kurt, 4152 Sarleinsbach (AT)
(74) Vertreter: Metals@Linz

(56) Entgegenhaltungen:
- EP-A2- 0 523 876
- DE-A1- 19 850 082
- US-A- 4 772 454
- US-A- 5 039 322
- US-A- 5 777 241

## Beschreibung

### Beschreibung

Die Erfindung bezieht sich auf eine Vorrichtung zur Entnahme heißer Gasproben aus einem Reaktionsgefäß mit einer ein beheiztes Innenrohr zur Gasführung und einen gekühlten Außenmantel umfassenden Entnahmesonde und mit einem der Entnahmesonde nachgeordneten Filter, das einen koaxial an das Innenrohr anschließenden, diesem gegenüber im Durchmesser erweiterten Filtertopf und eine in den Filtertopf eingesetzte Filterkerze aufweist.

Aufgrund hoher Gastemperaturen müssen die zum Abziehen von Gasproben aus einem Reaktionsgefäß eingesetzten Entnahmesonden mit einer Mantelkühlung versehen werden. Die mit einer solchen Mantelkühlung verbundene Gefahr einer Taupunktunterschreitung im Innenrohr der Entnahmesonde kann zwar durch eine Heizung des Innenrohres und einer Wärmeisolierung des Innenrohres gegenüber dem gekühlten Mantel weitgehend gebannt werden, doch bleibt der Wartungsaufwand vergleichsweise hoch, weil sich der Filtertopf des dem Innenrohr nachgeschalteten Filters mit dem zurückgehaltenen Staub füllt und gereinigt werden muß. Zur Vereinfachung der Filterreinigung wurde bereits vorgeschlagen (US 5 039 322 A), den Filtertopf als koaxiale, im Durchmesser erweiterte Verlängerung des Innenrohres der Entnahmesonde auszubilden und mit einem endseitigen Anschlußflansch für einen die Filterkerze tragenden, lösbaren Filterboden zu versehen, der in den Ringraum zwischen dem Filtertopf und der Filterkerze mündende, an eine Blasleitung anschließbare Blasdüsen aufweist. Aufgrund dieser Maßnahme kann der im Ringraum zwischen dem Filtertopf und der Filterkerze zurückgehaltene Staub aus dem Filtertopf durch das Innenrohr der Entnahmesonde wieder in das Reaktionsgefäß zurückgeblasen werden, wenn dieser Ringraum entsprechend durchblasen wird. Damit ist zwar eine automatische Filterreinigung möglich, doch stellt sich das Problem, daß Ablagerungen im Innenrohr der Sonde nicht entfernt werden können, insbesondere wenn sie im Bereich der Einströmöffnung auftreten.

Der Erfindung liegt somit die Aufgabe zugrunde, eine Vorrichtung zur Entnahme heißer Gasproben aus einem Reaktionsgefäß der eingangs geschilderten Art so zu verbessern, daß auch eine vorteilhafte Reinigung des Innenrohres der Entnahmesonde sichergestellt werden kann.

Die Erfindung löst die gestellte Aufgabe durch ein zum Innenrohr koaxiales, die Filterkerze gasdicht durchsetzendes Blasrohr, das über ein Ventil an einen Druckgasbehälter angeschlossen ist und in einer Blasdüse gegenüber dem Innenrohr der Entnahmesonde derart endet, dass mit dem Blasrohr ein Ausblasen des Innenrohrs mit dem Druckgas des Druckgasbehälters möglich ist.

Mit Hilfe des die Filterkerze koaxial durchsetzenden Blasrohres wird in einfacher Weise ein Ausblasen des Innenrohres der Entnahmesonde mit einem Druckgas, beispielsweise Luft oder Stickstoff, möglich, das unter einem entsprechenden Druck über einen Druckgasbehälter zur Verfügung steht. Die sich im Innenrohr ansammelnden Feststoffteilchen können somit in das Reaktionsgefäß zurückgeblasen werden, bevor sich diese Bestandteile am Innenrohr dauerhaft festsetzen können. Besonders günstige Reinigungsverhältnisse ergeben sich in diesem Zusammenhang, wenn das Ventil zwischen dem Druckgasbehälter und dem Blasrohr so angesteuert wird, daß es im Sinne einer Beaufschlagung des Blasrohres mit Druckimpulsen wiederholt öffnet und schließt. Diese Druckimpulse unterstützen das Losreißen von Staubteilchen von der Wandung des Innenrohres, was das Ausblasen des Innenrohres erleichtert.

Erfahrungsgemäß ist das Innenrohr der Entnahmesonde im Bereich der Einströmöffnung bezüglich der Staubablagerung besonders gefährdet. Bei längeren Sonden besteht daher die Gefahr, daß ein unmittelbar vor dem Innenrohr endendes Blasrohr nicht ausreicht, um Staubablagerungen im Bereich der Einströmöffnung in das Reaktionsgefäß zurückzublasen. Um hier Abhilfe zu schaffen, ist das Blasrohr entsprechend zu verlängern. Damit eine Grundkonstruktion an unterschiedliche Längen der Entnahmesonde in einfacher Weise angepaßt werden kann, kann an das unmittelbar vor dem Innenrohr endende Blasrohr eine in das Innenrohr eingreifende Rohrverlängerung eingesetzt werden.

Um Staubablagerungen im Bereich der Einströmöffnung der Entnahmesonde, insbesondere beim Einsatz für Prozeßgase mit einem höheren Alkali- oder Zinkgehalt und hohen Prozeßtemperaturen zu erschweren, kann das Innenrohr auf der Gaseinströmseite einen Endabschnitt aus Keramik bilden. Dieser Keramikabschnitt kann über die Prozeßgase auf eine Temperatur über der durch die Innenrohrbeheizung bedingten Temperatur erwärmt werden, so daß die staubbeladenen Entnahmegase allmählich auf die Entnahmetemperatur abgekühlt werden, was einer sonst unter Umständen gegebenen Kondensationsgefahr vorbeugt. Dazu kommt, daß der anfallende Staub am keramischen Werkstoff nicht so leicht anhaftet, so daß der Staub mit Hilfe der Druckgasströmung aus dem Blasrohr in das Reaktionsgefäß zurückgeblasen werden kann.

Die Gefahr von Staubablagerungen im Bereich der Einströmöffnung der Entnahmesonde hängt unter anderem auch von der Lage der Entnahmesonde gegenüber den Strömungsverhältnissen im Reaktionsgefäß ab. Liegt die Einströmöffnung im Bereich einer Strömungsabschirmung, also in einer Beruhigungszone, so dringt im allgemeinen ein geringerer Staubanteil in die Einströmöffnung der Entnahmesonde ein. In anderen Fällen ist mit einem vermehrten Staubanfall im Bereich der Einströmöffnung zu rechnen. Der damit verbundenen Gefahr einer Verstopfung kann in vorteilhafter Weise dadurch begegnet werden, daß das Innenrohr neben einer koaxialen Einströmöffnung über den Umfang verteilte radiale Einströmstutzen aufweist, die mit einer keramischen Auskleidung und einer Heizung versehen sind, so daß sich stets zumindest eine Einströmöffnung in einer strömungstechnisch günstigen Lage für die Gasentnahme anbietet. Durch ein teilweises Verstopfen einer anderen Einströmöffnung wird die Funktionstüchtigkeit der Entnahmesonde nicht beeinträchtigt.

In der Zeichnung ist der Erfindungsgegenstand beispielsweise dargestellt. Es zeigen

| | |
|---|---|
| Fig. 1 | eine erfindungsgemäße Vorrichtung zur Entnahme heißer Gasproben aus einem Reaktionsgefäß in einem vereinfachten Längsschnitt, |
| Fig. 2 | den an das Innenrohr der Entnahmesonde anschließenden Filtertopf in einem Axialschnitt in einem größeren Maßstab und |
| Fig. 3 | einen Axialschnitt durch eine gegenüber der Fig. 1 abgewandelte Entnahmesonde im Bereich der Einströmöffnung in einem größeren Maßstab. |

Die dargestellte Vorrichtung zur Entnahme heißer Gasproben aus einem Reaktionsgefäß weist eine Gasentnahmesonde 1 mit einem nachgeordneten Filter 2 auf, das einen koaxial an das Innenrohr 3 der Entnahmesonde 1 anschließenden, diesem gegenüber im Durchmesser erweiterten Filtertopf 4 und eine in den Filtertopf 4 eingesetzte Filterkerze 5 umfaßt. Der Boden 6 des Filters 2 ist mit Hilfe von aus Übersichtlichkeitsgründen nicht dargestellten Schrauben lösbar mit einem Anschlußflansch 7 Filtertopfes 4 verbunden und trägt ein zur Filterkerze 5 koaxiales Blasrohr 8, das die Filterkerze 5 gasdicht durchsetzt und an seinem gegen das Innenrohr 3 der Entnahmesonde 1 vorstehenden Ende eine Blasdüse 9 trägt. Das Blasrohr 8 ist über einen Verbindungsstutzen 10 und ein nachgeschaltetes Ventil an einen Druckgasbehälter angeschlossen. Das Blasrohr 8 dient jedoch nicht nur zum Ausblasen des Innenrohres 3, sondern bildet auch eine Halterung für die Filterkerze 5, die auf dem Blasrohr 9 mit Hilfe einer Druckfeder 11 gasdicht an den Filterboden 6 angedrückt wird.

Die über die Entnahmesonde 1 einem Reaktionsgefäß entnommene Gasprobe wird durch das Innenrohr 3 der Entnahmesonde 1 in den Ringraum 12 zwischen dem Filtertopf 4 und der Filterkerze 5 geleitet, um anschließend die Filterkerze 5 zu durchsetzen und über eine Entnahmebohrung 13 im Filterboden 6 aus der Filterkerze 5 abgezogen und über einen Meßleitungsanschluß 14 abgeleitet zu werden. Der durch die Filterkerze 5 zurückgehaltene Staubanteil der Gasproben kann aus dem Filtertopf 4 ausgeblasen werden, und zwar mit Hilfe eines Blasanschlusses 15, über den von einer parallelen Entnahmesonde aus dem Reaktionsgefäß abgezogenes Reaktionsgas durch das Filter 2 und das Innenrohr 3 der Gasentnahmesonde 1 wieder in den Reaktionsraum geblasen werden kann. Der Blasanschluß 15 beaufschlagt zu diesem Zweck einen im Filterboden 6 vorgesehenen Ringraum 16, der durch Blasöffnungen 17 mit dem Ringraum 12 zwischen dem Filtertopf 4 und der Filterkerze 5 verbunden ist.

Das Innenrohr 3 der Entnahmesonde 1 ist zusammen mit dem Filtertopf 4 mit einer elektrischen Widerstandsheizung 18 umwunden, um eine Taupunktunterschreitung sowohl im Bereich der Entnahmesonde 1 als auch im Bereich des anschließenden Filters 2 zu unterbinden. Der Außenmantel 19 der Entnahmesonde 1 muß allerdings gekühlt werden. Aus diesem Grunde ist das Innenrohr 3 mit der Widerstandsheizung 18 gegenüber dem Außenmantel 19 durch eine Wärmeisolierung 20 abgeschirmt. Der Außenmantel 19, der den heißen Gasen innerhalb des Reaktionsgefäßes ausgesetzt ist, ist doppelwandig ausgeführt und mit einer Kühlflüssigkeitszuleitung 21 sowie einer Kühlflüssigkeitsableitung 22 versehen, so daß die über den Außenmantel 19 aufgenommene Wärme mit Hilfe der Kühlflüssigkeit abgeführt werden kann. Obwohl der Filtertopf 4 außerhalb des Reaktionsgefäßes zu liegen kommt, ist auch der Filtertopf 4 von einem Außenmantel 23 mit einer Wärmeisolierung 24 umschlossen, um unnötige Wärmeverluste für die Widerstandsheizung 18 zu vermeiden.

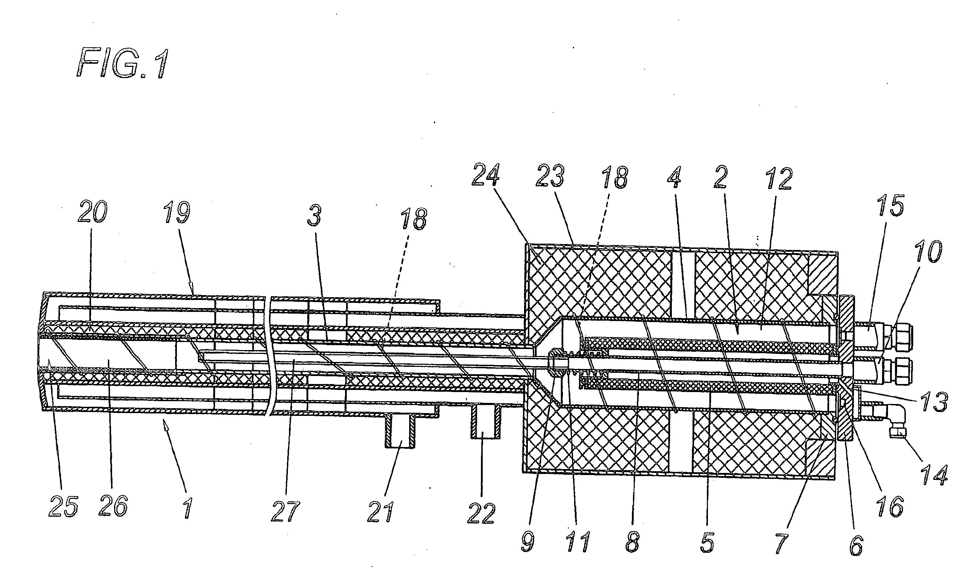

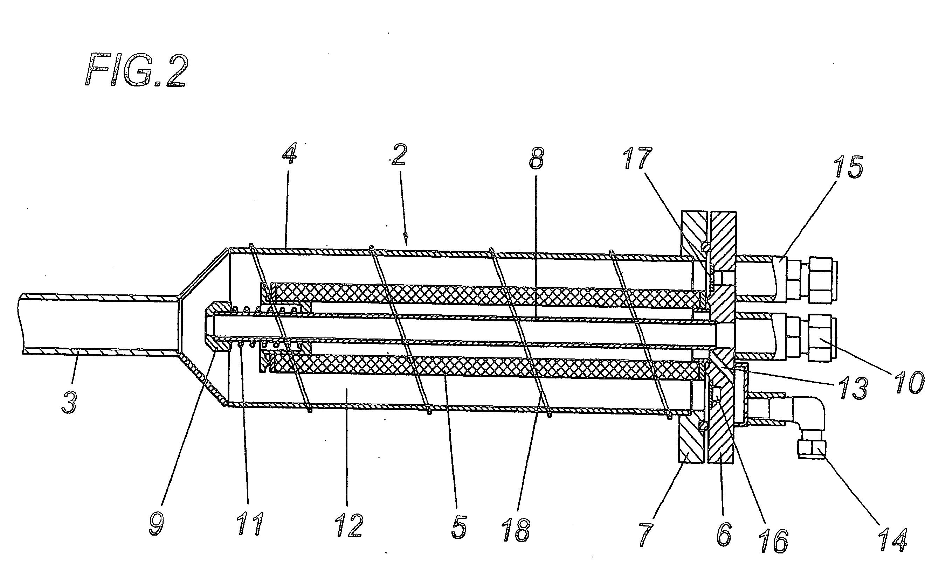

Damit im Bereich der Einströmöffnung 25 der Entnahmesonde 1 eine entsprechend hohe Temperatur im Bereich des Innenrohres 3 sichergestellt werden kann, kann der einströmseitige Endabschnitt 26 aus einem keramischen Rohrstutzen bestehen, wie dies in der Fig. 1 dargestellt ist. Durch diesen keramischen Endabschnitt 26 des Innenrohres 3 wird eine allmähliche Abkühlung der Gasproben auch im Wandbereich des Innenrohres 3 mit dem Vorteil sichergestellt, daß die entnommenen Gasproben allmählich abgekühlt werden und dadurch die Gefahr einer Taupunktunterschreitung zusätzlich verringert wird. Sich im Bereich des keramischen Endabschnittes 26 anlagernde Feststoffteilchen weisen gegenüber dem keramischen Werkstoff eine vergleichsweise geringe Haftneigung auf, so daß zur Reinigung des Innenrohres 3 ein Ausblasen des Innenrohres 3 mit Hilfe eines Druckgases ausreicht, das über das Blasrohr 8 in das Innenrohr 3 geblasen wird. Die Reinigungswirkung kann dabei verstärkt werden, wenn die Beaufschlagung des Blasrohres 8 mit Druckgas im Sinne von Druckimpulsen erfolgt, wofür das Ventil zwischen dem Blasrohr 8 und dem Druckgasbehälter wiederholt geöffnet und geschlossen werden muß, und zwar mit vergleichsweise großen Öffnungsgeschwindigkeiten.

Damit bei längeren Entnahmesonden 3 die aufgrund des Strömungswiderstandes im Innenrohr 3 abnehmende Reinigungswirkung des Blasluftstromes ausgeglichen werden kann, kann an das Blasrohr 8 eine in das Innenrohr 3 eingreifende Rohrverlängerung 27 vorgesehen werden, wie dies in der Fig. 1 strichpunktiert angedeutet ist. Da die Staubbelastung des Innenrohres 3 insbesondere im Bereich der Einströmöffnung 25 auftritt, wird durch die Rohrverlängerung 27 die gesamte Reinigung des Innenrohres 3 kaum beeinträchtigt, weil ja bei der Filterreinigung über den Blasluftanschluß 15 ebenfalls ein Ausblasen des Innenrohres 3 erfolgt.

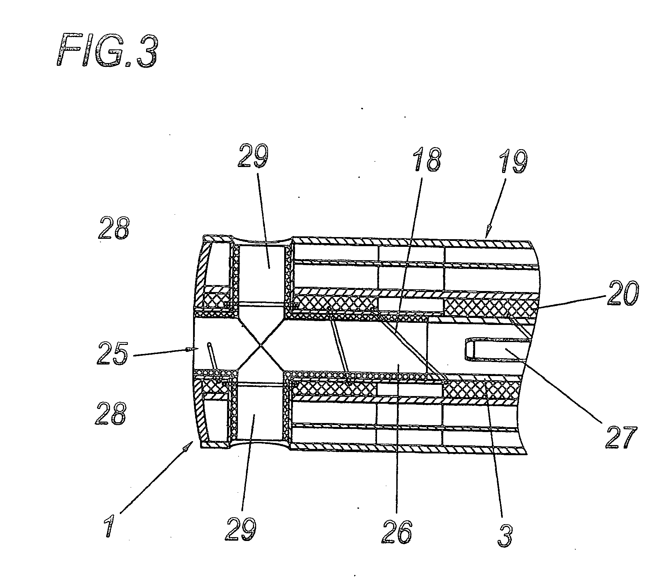

Wie der Fig. 3 entnommen werden kann, kann die Entnahmesonde 1 nicht nur eine koaxiale Einströmöffnung 25, sondern auch quer dazu verlaufende Einströmöffnungen aufweisen, die durch radiale Einströmstutzen 28 gebildet werden. Diese radialen Einströmstutzen 28 sind wie die Einströmöffnung 25 mit einer keramischen Auskleidung 29 versehen, so daß hinsichtlich des Temperaturverlaufes entlang der Einströmöffnungen und bezüglich der Anhaftung von Staubteilchen an der Wandung die Vorteile eines keramischen Endabschnittes des Innenrohres für alle Einströmöffnungen genützt werden können. Mit dem Vorsehen mehrer Einströmöffnungen können für die Staubablagerung ungünstige Anströmverhältnisse im Bereich einer Einströmöffnung in Kauf genommen werden, ohne die Funktionstüchtigkeit der Entnahmesonde zu gefährden, weil ja im Bereich einer anderen Einströmöffnung vorteilhafte Anströmbedingungen herrschen.

## Patentansprüche

1. Vorrichtung zur Entnahme heißer Gasproben aus einem Reaktionsgefäß mit einer ein beheiztes Innenrohr (3) zur Gasführung und einen gekühlten Außenmantel (19) umfassenden Entnahmesonde (1) und mit einem der Entnahmesonde (1) nachgeordneten Filter (2), das einen koaxial an das Innenrohr (3) anschließenden, diesem gegenüber im Durchmesser erweiterten Filtertopf (4) und eine in den Filtertopf eingesetzte Filterkerze (5) aufweist, **gekennzeichnet durch**
ein zum Innenrohr (3) koaxiales, die Filterkerze (5) gasdicht durchsetzendes Blasrohr (8),
das über ein Ventil an einen Druckgasbehälter angeschlossen ist
und in einer Blasdüse (9) gegenüber dem Innenrohr (3) der Entnahmesonde (1) derart endet,
dass mit dem Blasrohr (8) ein Ausblasen des Innenrohrs (3) mit einem Druckgas des Druckgasbehälters möglich ist.

2. Vorrichtung nach Anspruch 1, **dadurch gekennzeichnet, dass** das Ventil zwischen dem Druckgasbehälter und dem Blasrohr (8) im Sinne einer Beaufschlagung des Blasrohres (8) mit Druckimpulsen wiederholt öffnet und schließt.

3. Vorrichtung nach Anspruch 1 oder 2, **dadurch gekennzeichnet, dass** das Blasrohr (8) unmittelbar vor dem Innenrohr (3) endet und dass an das Blasrohr (8) eine in das Innenrohr (3) eingreifende Rohrverlängerung (27) einsetzbar ist.

4. Vorrichtung nach einem der Ansprüche 1 bis 3, **dadurch gekennzeichnet, dass** das Innenrohr (3) auf der Gaseinströmseite einen Endabschnitt (26) aus Keramik bildet.

5. Vorrichtung nach einem der Ansprüche 1 bis 4, **dadurch gekennzeichnet, dass** das Innenrohr (3) neben einer koaxialen Einströmöffnung (25) über den Umfang verteilte, radiale Einströmstutzen (28) aufweist, die mit einer keramischen Auskleidung (29) und einer Heizung (18) versehen sind.

## Claims

1. Apparatus for removing hot gas samples from a reactor having a sampling probe (1) comprising a heated inner pipe (3) for the gas supply and a cooled outer shell (19) and having a filter (2) arranged downstream of the sampling probe (1), said filter having a filter bowl (4) connecting coaxially to the inner pipe (3) and by comparison herewith extended in terms of diameter and a filter cartridge (5) used in the filter bowl, **characterised by**
a blow pipe (8) which is coaxial to the inner pipe (3) and penetrates the filter cartridge (5) in a gas tight manner, said blow pipe connecting to a pressurized gas container by way of a valve,
and ending in a blowing nozzle (9) opposite the inner pipe (3) of the sampling probe (1) such that,
a blowing out of the inner pipe (3) with a pressurized gas of the pressurized gas container is possible with the blow pipe (8).

2. Apparatus according to claim 1, **characterised in that** the valve repeatedly opens and closes between the pressurized gas container and the blow pipe (8) within the sense of applying the blow pipe (8) with pressure impulses.

3. Apparatus according to claim 1 or 2, **characterised in that** the blow pipe (8) ends immediately upstream of the inner pipe (3) and that a pipe extension (27) engaging into the inner pipe (3) can be used on the blow pipe (8).

4. Apparatus according to one of claims 1 to 3, **characterised in that** the inner pipe (3) forms an end section (26) made of ceramic on the gas inflow side.

5. Apparatus according to one of claims 1 to 4, **characterised in that** the inner pipe (3) comprises radial inlets (28) distributed adjacent to a coaxial inflow opening (25) across the periphery, said inlets being provided with a ceramic lining (29) and a heater (18).

## Revendications

1. Dispositif pour le prélèvement d'échantillons de gaz chauds dans un réacteur ayant une sonde de prélèvement (1) comprenant un tube intérieur chauffé (3) pour la conduite de gaz et une enveloppe extérieure refroidie (19) et ayant un filtre (2) disposé en aval de la sonde de prélèvement (1), lequel comprend un pot de filtre (4) raccordé de façon coaxiale au tube intérieur (3), allant en s'élargissant en diamètre par rapport à celui-ci, et une bougie de filtre (5) insérée dans le pot de filtre, **caractérisé par**
un tube de soufflage (8) traversant de façon étanche aux gaz la bougie de filtre (5), coaxial par rapport au tube intérieur (3),
qui est raccordé à un récipient de gaz comprimé par l'intermédiaire d'une soupape
et s'achève en une buse de soufflage (9) en regard du tube intérieur (3) de la sonde de prélèvement (1) de manière telle qu'à l'aide du tube de soufflage (8) une éjection du tube intérieur (3) par un gaz comprimé du récipient de gaz comprimé soit possible.

2. Dispositif selon la revendication 1, **caractérisé en ce que** la soupape entre le récipient de gaz comprimé et le tube de soufflage (8) s'ouvre et se ferme de façon répétée dans le sens d'une sollicitation du tube de soufflage (8) par des impulsions de pression.

3. Dispositif selon la revendication 1 ou 2, **caractérisé en ce que** le tube de soufflage (8) s'achève directement devant le tube intérieur (3) et **en ce qu'**un prolongement tubulaire (27) s'engageant dans le tube intérieur (3) peut être installé sur le tube de soufflage (8).

4. Dispositif selon l'une des revendications 1 à 3, **caractérisé en ce que** le tube intérieur (3) forme, sur le côté d'admission des gaz, un tronçon d'extrémité (26) en céramique.

5. Dispositif selon l'une des revendications 1 à 4, **caractérisé en ce que** le tube intérieur (3) présente, en plus d'une ouverture d'admission coaxiale (25), des tubulures d'admission radiales (28) réparties sur la périphérie qui sont pourvues d'un habillage en céramique (29) et d'un élément chauffant (18).
